# FASCICULE DE BREVET EUROPEEN

(11) **EP 1 452 784 B1**
(45) Date de publication et mention de la délivrance du brevet: **26.09.2007**
(21) Numéro de dépôt: 04290376.5
(22) Date de dépôt: 12.02.2004
(51) Int. Cl.: F16H 61/28, F16H 61/30, F16H 61/32

(54) **Dispositif et selecteur de commande de boîte de vitesses**
Schaltvorrichtung für ein Schaltgetriebe
Ratio selector apparatus for a change-speed vehicle gearbox

(30) Priorité: 21.02.2003 FR 0302142
(43) Date de publication de la demande: 01.09.2004
(73) Titulaire: RENAULT s.a.s., 92100 Boulogne Billancourt (FR)
(72) Inventeur: Maillard, Jean Pierre, 78790 Septeuil (FR); Raoul, Michel, 78990 Elancourt (FR)
(74) Mandataire: Rougemont, Bernard

(56) Documents cités:
- EP-A- 0 928 910
- EP-A- 1 081 416
- WO-A-03/029040
- FR-A- 2 814 524
- PATENT ABSTRACTS OF JAPAN vol. 013, no. 299 (M-847), 11 juillet 1989 (1989-07-11) & JP 01 087948 A (JIDOSHA KIKI CO LTD), 3 avril 1989 (1989-04-03)
- PATENT ABSTRACTS OF JAPAN vol. 1996, no. 03, 29 mars 1996 (1996-03-29) & JP 07 301331 A (HINO MOTORS LTD), 14 novembre 1995 (1995-11-14)

## Description

La présente invention se rapporte à la commande interne des boîtes de vitesses.

Elle trouve une application privilégiée mais non limitative dans les boîtes de vitesses à commande automatisée ou robotisée, c'est à dire dont l'ensemble des actionneurs, de commande d'embrayage, de sélection et d'engagement des rapports, est placé sous le contrôle d'un calculateur prenant tout ou partie des décisions de commande à la place du conducteur.

Plus précisément, cette invention concerne un dispositif de commande de sélection et de passage des vitesses d'une boîte de vitesses à arbres parallèles et à pignons fous, comportant des moyens internes de sélection et de passage de vitesses déplaçant par l'intermédiaire de fourchettes d'actionnement des bagues de crabotage des pignons fous

Elle concerne également un sélecteur de commande interne de boîte de vitesses comportant des moyens de sélection et des moyens de passage de vitesses.

On connaît des systèmes de passage de vitesses pour boîtes de vitesses robotisées, comprenant :
- plusieurs fourchettes de passage de vitesses coulissantes pouvant adopter une position neutre ou des positions de vitesses engagées, de part et d'autre de celle-ci,
- des moyens d'actionnement placés à l'extérieur de la boîte, comprenant d'une part un premier vérin à plusieurs positions stables pour sélectionner, par translation d'un doigt de passage selon son propre axe, la fourchette correspondant au passage de la vitesse souhaitée, et d'autre part un deuxième vérin à double effet, pour faire coulisser la fourchette et passer ainsi cette vitesse par rotation du doigt de passage.

L'actionnement hydraulique est bien adapté pour la fourniture des efforts en passage, mais l'est beaucoup moins en sélection, lorsqu'il faut plus de trois positions de sélection stables. Ceci est le cas notamment pour les boîtes de vitesses à six rapports qui présentent le plus souvent au moins quatre lignes de sélection.

Un autre système connu consiste à remplacer les moyens d'actionnement hydraulique par des moyens électromécaniques également placés à l'extérieur de la boîte. Cette autre solution est décrite dans la publication FR 2 808 313. L'actionnement par moto-réducteurs électriques est alors bien adapté aux multiples lignes de sélection, et permet d'appliquer des efforts de passage importants.

Dans ces systèmes connus, les actionneurs sont agencés à l'extérieur de la boite, ce qui pose des problèmes d'encombrement. Toutefois, le contrôle des positions de sélection et d'engagement peut être réalisé facilement par la mise en place de capteurs de position ou de potentiomètres.

On connaît encore un autre système de passage de vitesses pour boîtes de vitesses robotisées, décrit notamment dans la publication FR 2 798 978. Ce système associe à chaque fourchette deux vérins hydrauliques à simple effet montés en opposition : ceci rend plus complexe le système de distribution hydraulique, multiplie les électrovannes de commande, et augmente le coût des moyens de contrôle de position correspondants.

Un dispositif de commande et un sélecteur de commande, tels que décrits dans les préambules des revendications 1 et 7, sont connus du EP 1081416 A.

La présente invention vise à remédier aux inconvénients de ces différents systèmes de commande, en proposant un dispositif peu encombrant, composé d'un actionneur de sélection électromécanique agencé à l'extérieur de la boîte et d'un actionneur hydraulique de passage unique installé à l'intérieur de celle-ci.

De préférence, les moyens de sélection et de passage des vitesses sont entraînés en rotation autour d'un axe parallèle aux arbres primaire et secondaires de la boîte.

Selon un mode de réalisation particulier, les moyens comprennent un barillet de sélection cylindrique entraîné en rotation et possédant des secteurs périphériques de plus grand diamètre qui assurent le désengagement des rapports et le verrouillage au point mort, et un chariot de passage entraîné en translation et possédant au moins un doigt d'actionnement des crabots de fourchettes.

Comme indiqué plus haut, l'invention concerne également un sélecteur de commande interne de boîte de vitesses composé d'un barillet de sélection cylindrique entraîné en rotation par un actionneur électromagnétique disposé à l'extérieur de la boîte, et d'un chariot de passage entraînée par un actionneur hydraulique de passage unique disposé à l'intérieur de la boîte.

Selon un mode de réalisation préférentiel, l'actionneur hydraulique entraînant le chariot de passage cylindrique est constitué d'un vérin à deux chambres, concentrique au barillet et placé à l'extérieur de ce dernier.

D'autres caractéristiques et avantages de la présente invention apparaîtront clairement à la lecture de la description détaillée d'un mode de réalisation non limitatif de celle-ci, en se reportant aux dessins annexés sur lesquels :
- la figure 1 représente l'ensemble du dispositif de commande en position de sélection du rapport de première,
- la figure 2 représente l'ensemble du dispositif de commande en position extrême de sélection du rapport de marche arrière,
- la figure 3 représente l'ensemble du dispositif en position extrême de sélection du rapport de quatrième, et
- les figures 4, 4A, 4B représentent en coupe l'ensemble du sélecteur, le chariot étant respectivement en position de point mort et de rapports engagés,

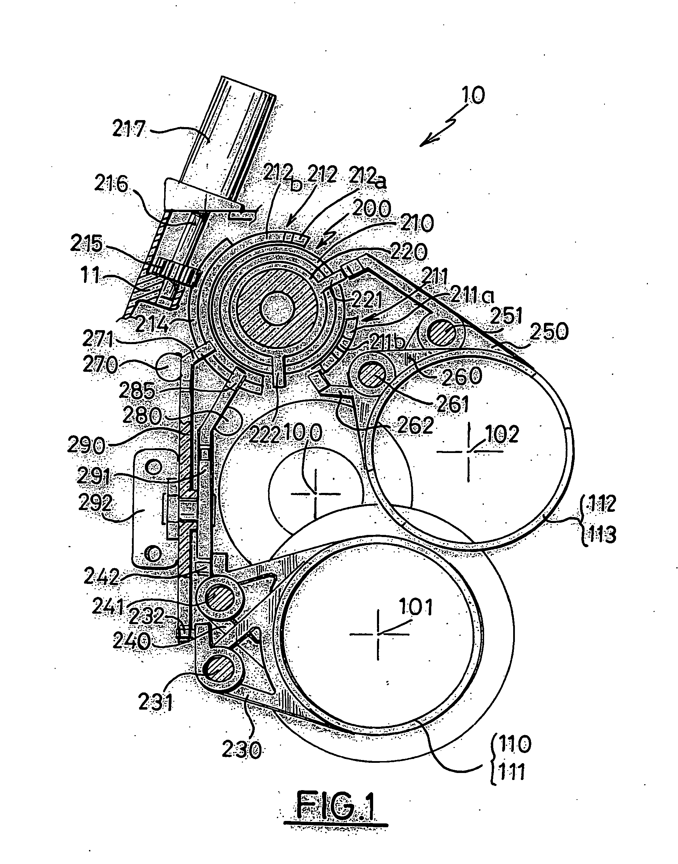

On a représenté sur la figure 1 l'ensemble du dispositif de commande proposé, permettant de commander les changements de vitesse d'une boîte de vitesses à deux arbres secondaires.

Ce dispositif comporte un sélecteur unique 200 dont l'axe de rotation est parallèle aux axes de l'arbre primaire 100 et des arbres secondaires 101, 102. Le sélecteur 200 peut tourner par rapport à son axe, et est composé d'un barillet de sélection cylindrique 210, fixe axialement par rapport à ce même axe, portant deux secteurs périphériques 211, 212 de plus grand diamètre, et d'un chariot de passage 220, également de forme cylindrique, concentrique au barillet 210 et placé à l'intérieur de ce dernier. Le chariot 220 est entraîné en rotation par le barillet 210 par l'intermédiaire des doigts 221 et 222, et il peut se déplacer axialement. Selon sa position angulaire, le barillet 210 place ou non les doigts 221 et 222 en vis à vis des crabots des axes de fourchette avec lesquels ils coopèrent.

Les moyens prévus pour la commande des groupes de crabotage comprennent une première fourchette 230 de commande du groupe de crabotage 110 des rapports de troisième et de cinquième, portée par un axe 231 coulissant par rapport à ses paliers dans le carter de la boîte. L'axe 231 porte un pion d'entraînement 232. Une deuxième fourchette 240 de commande du groupe de crabotage 111 des rapports de sixième et de deuxième est portée par un axe 241, portant un pion d'entraînement 242. Une troisième fourchette 250 de commande du groupe de crabotage 112 du rapport de première, est portée par un axe 251 portant un crabot d'entraînement 252. Enfin, une quatrième fourchette 260 de commande du groupe de crabotage 113 des rapports de quatrième et de marche arrière est portée par un axe 261, portant un crabot d'entraînement 262.

Deux basculeurs 290 et 291 portés par un unique support 292 transfèrent les mouvements axiaux des axes relais 270 et 280 vers les fourchettes 230 et 240 situées en partie basse de la boîte. L'axe 270 porte un crabot double 271 qui coopère respectivement avec le basculeur 290 et le doigt 222 du chariot 220 d'engagement des rapports. L'axe 280 porte également un crabot double 281, qui coopère respectivement avec le basculeur 291 et avec le doigt 222.

Le barillet 210 comporte sur sa périphérie, deux secteurs 211 et 212 qui possèdent à chacune de leurs extrémités des flancs inclinés 211a et 212a, qui coopèrent avec les crabots de fourchettes 252, 262, 271, 281. Ces secteurs ont pour rôle de désengager les rapports. En partie centrale, ils présentent une zone à flancs parallèles 211b et 212b qui coopèrent avec lesdits crabots de fourchettes pour maintenir ces derniers en position point mort. A l'extérieur du secteur 212, un secteur angulaire denté 214 coopère avec le pignon 215 porté par l'axe 216 d'un moteur électrique 217 supporté par le carter 11 de la boîte de vitesses.

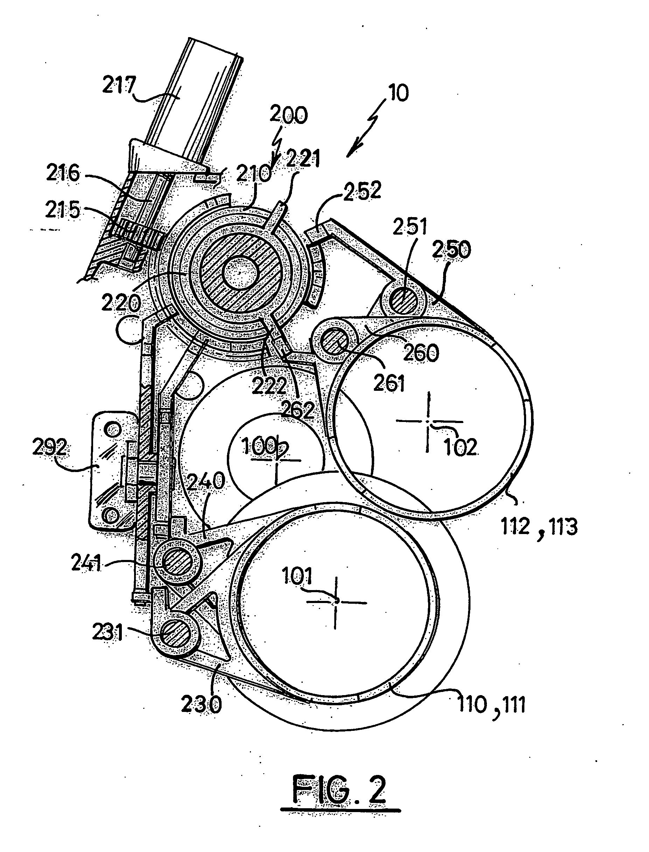

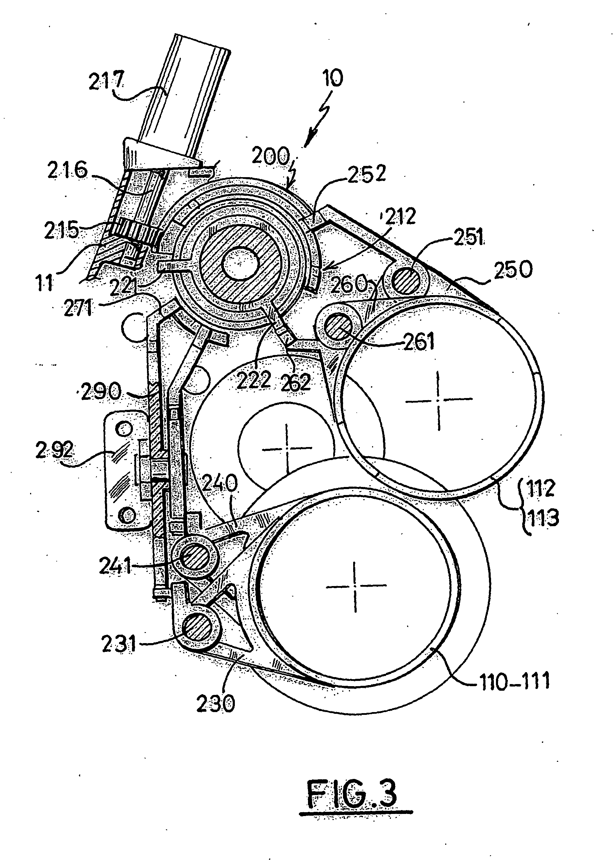

Le barillet 210 est animé en rotation par un moteur électrique 217 agencé à l'extérieur de la boîte de vitesses, et peut ainsi prendre différentes positions angulaires correspondant à la mise en position des doigts 221, 222 dans les crabots 252, 262, 271, 281 de commande des fourchettes 250, 260, 230, 240. Sur les figures 2 et 3, le sélecteur 210 est représenté en position extrême, respectivement en position de sélection du rapport de marche arrière pour la figure 2 et en position de sélection du rapport de quatrième pour la figure 3.

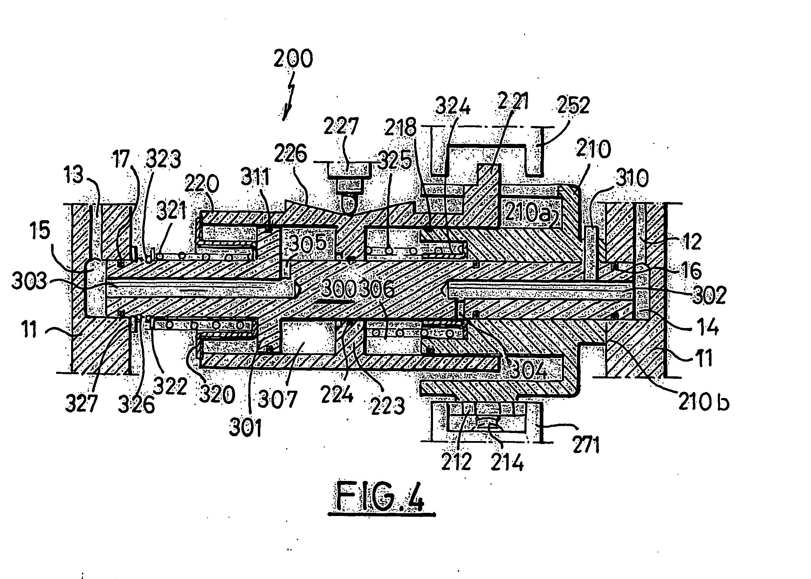

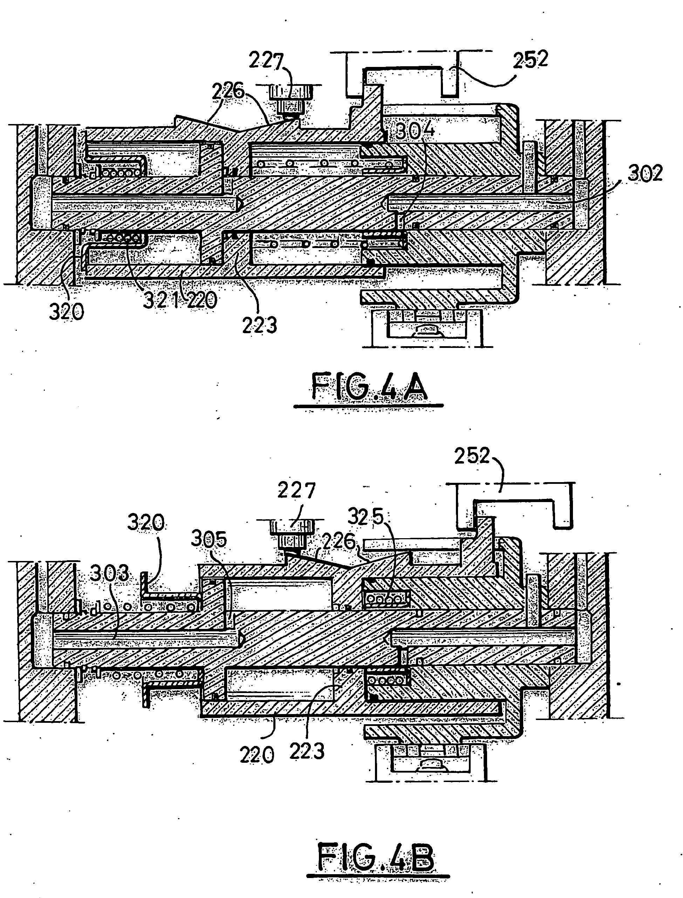

Sur les figures 4, 4A, 4B, on a représenté en coupe l'ensemble du sélecteur 200. Il est composé du barillet 210, de l'axe 300 et du chariot 220. Le barillet 210 comporte à sa périphérie le secteur 212 coopérant avec le crabot 271 de commande de fourchette 230 surmonté du secteur denté 214 de commande en rotation par le pignon 215 animé par le moteur 217. Le barillet est porté par l'axe 300 sur lequel il est fixé axialement et en rotation par la goupille 310, le chariot 220 portant le doigt 221 qui coopère avec le crabot 252 de commande de fourchette 250. L'axe 300 est guidé par ses extrémités dans le carter 11. Il comporte un épaulement 301 ayant une gorge à sa périphérie contenant un joint d'étanchéité 311, et présente deux perçages axiaux 302, 303, et deux perçages radiaux 304, 305 permettant l'alimentation en fluide sous pression des deux chambres du vérin 306, 307. Le fluide sous pression parvient aux extrémités de l'axe 300 par deux conduits d'alimentation 12 et 13 débouchant dans les chambres 14 et 15. L'étanchéité des chambres 14 et 15 est assurée par les joints 16 et 17 contenus dans deux gorges usinées dans l'axe 15.

Le chariot 220 est cylindrique, et comporte une cloison 223 présentant en son centre un perçage cylindrique avec une gorge contenant un joint d'étanchéité 224. Il est guidé sur l'axe 300 par sa cloison 223 et par l'épaulement 301. Il est guidé sur le barillet 210 par la surface cylindrique 210.a qui comporte une gorge contenant un joint d'étanchéité 218. L'ensemble axe 300 et barillet 210 est maintenu axialement dans le carter 11 en prenant appui sur ce dernier d'un coté par la face 210b du barillet et du coté opposé par un anneau d'arrêt 326 associé à une rondelle de calage 327.

Conformément à l'invention, la cloison centrale 223 du chariot 220 joue le rôle de piston. Elle forme avec la surface cylindrique intérieure du chariot, la surface cylindrique 210a du barillet 210 et l'axe 300 une première chambre de compression étanche 306 alimentée par les conduits 302, 304 et permet le déplacement axial du chariot vers la gauche. Elle forme par ailleurs avec la surface cylindrique intérieure du chariot 220, l'axe 300 et l'épaulement 301 une seconde chambre de compression étanche 307 alimentée par les conduits 303, 305, et permet le déplacement axial du chariot vers la droite.

Des moyens de rappel mécanique positionnent le chariot de manière à ce que les doigts 221, 222 soient centrés par rapport aux crabots de fourchette 252, 262, 271, 281 eux-mêmes en position point mort. Ces moyens comprennent une première coupelle 320 plaquée contre l'épaulement 301 de l'axe 300 par un premier ressort 321, qui prend appui sur une rondelle 322. Celle-ci est arrêtée par l'anneau d'arrêt 323. Ils comprennent une deuxième coupelle 324 plaquée contre le barillet 210 par un second ressort 325 également qui repousse le chariot 220 contre la première coupelle 320. La charge du premier ressort 321 étant supérieure à celle du second ressort 325, le chariot 220 est en position axiale d'appui stable et précis sur la coupelle 320 en position de point mort.

Les figures 4, 4A, 4B montrent le chariot 220 dans ses trois positions. Sur la figure 4A, il est dans sa position extrême à gauche correspondant à une première position de rapport engagé. Cette position est obtenue en alimentant en fluide sous pression la chambre de droite 306 par les conduits 302 et 304. Avec une pression hydraulique identique dans les deux chambres 306, 307, c'est-à-dire de part et d'autre de la cloison 223, le ressort 321 repousse la coupelle 320 et le chariot 220 vers la droite jusqu'à ce que la coupelle 320 entre en contact avec l'épaulement 301 de l'arbre 300 : cette position médiane stable, illustrée par la figure 4 correspond au point mort. Sur la figure 4B, le chariot 220 est repoussé à droite dans une deuxième position de rapport engagé. Cette position est atteinte en alimentant en fluide sous pression la chambre de gauche 307 par les conduits 303 et 305. A partir de cette position, on revient également en position de point mort, en établissant la même pression dans les deux chambres 306, 307. Le ressort 325 repousse alors le chariot 220 vers la gauche, mais seulement jusqu'à la coupelle 320, c'est-à-dire en position médiane de point mort, puisque le ressort 321 est plus chargé que le ressort 325.

En résumé, la cloison médiane 223 définit avec le barillet de sélection 210 et l'axe 300 deux chambres de compression antagonistes 306, 307. La cloison 223 sépare les deux chambres de manière à constituer un piston de commande en translation du chariot 220 sur l'axe 300 et sur le barillet 210. Enfin, le retour et le positionnement au point mort de l'actionneur de passage 220 sont assurés par les ressorts antagonistes 321 et 325, coopérant avec la coupelle extérieure 320 plaquée dans cette position contre un épaulement 301 de l'axe 300, et contre une extrémité du chariot 210 en position de point mort. Comme indiqué précédemment, le premier ressort 321 repoussant le chariot vers la position de point mort par l'intermédiaire de la première coupelle 320 est plus chargé que le second.

Enfin, pour informer le calculateur prenant les décisions d'engagement des rapports, le chariot 220 peut posséder sur un secteur angulaire une simple ou une double rampe 226, qui coopère avec un contacteur ou un potentiomètre 227. Le calculateur est ainsi informé de la position axiale du chariot, médiane, ou position de vitesse engagée à gauche ou à droite.

## Revendications

1. Dispositif de commande de sélection et de passage des vitesses (10) d'une boîte de vitesses à arbres parallèles (100, 101, 102) et à pignons fous, comportant des moyens internes de sélection et de passage de vitesses déplaçant par l'intermédiaire de fourchettes d'actionnement (230, 240, 250, 260) des bagues de crabotage (110,111,112,113) des pignons fous comportant un actionnaire de sélection électromécanique (217) et un actionneur hydraulique de passage (220) unique, **caractérisé en ce que** l'actionneur de sélection électromécanique (217) est agencé à extérieur de la boîte et **en ce que** l'actionneur hydraulique de passage (220) est installé à l'intérieur de la boîte.

2. Dispositif de commande selon la revendication 1 **caractérisé en ce que** les moyens de sélection et de passage des vitesses sont entraînés en rotation autour d'un axe parallèle aux arbres primaire (100) et secondaires (101, 102).

3. Dispositif de commande selon la revendication 2, **caractérisé en ce que** les moyens comprennent un barillet de sélection cylindrique (210) entraîné en rotation par l'actionneur (217) et possède des secteurs périphériques (211, 212, 213) de plus grand diamètre qui assurent le désengagement des rapports et le verrouillage au point mort.

4. Dispositif de commande selon la revendication 3, **caractérisé en ce que** l'actionneur hydraulique est constitué par un chariot de passage (220) cylindrique, concentrique au barillet (210) et placé à l'extérieur de ce dernier.

5. Dispositif de commande selon la revendication 3 ou 4, **caractérisé en ce que** le barillet (210) comporte en périphérie un secteur denté (214) entraîné en rotation par l'actionneur (217).

6. Dispositif de commande selon la revendication 3, 4 ou 5, **caractérisé en ce qu**e les moyens de sélection et de passage comportent un axe de support commun (300) du barillet (210) et du chariot (220) constituant avec ces derniers un sélecteur (200) disposé à l'intérieur de la boîte.

7. Sélecteur de commande interne de boîte de vitesses **caractérisé en ce qu**'il comporte un barillet de sélection cylindrique (210) entraîné en rotation par un actionneur électromécanique (217) disposé à l'extérieur de la boîte, et un actionneur hydraulique de passage (220) unique.

8. Sélecteur de commande selon la revendication 7, **caractérisé en ce que** le barillet (210) est entraîné en rotation par l'actionneur (217) et possèdent des secteurs périphériques (211, 212, 213) de plus grand diamètre qui assurent le désengagement des rapports et le verrouillage au point mort.

9. Sélecteur de commande selon la revendication 7 ou 8, **caractérisé en ce que** l'actionneur hydraulique est constitué par un chariot de passage (220) cylindrique, concentrique au barillet (210) et placé à l'extérieur de ce dernier.

10. sélecteur de commande selon la revendication 9, **caractérisé en ce que** le chariot (220) présente au moins un doigt (221, 222) mobile en translation axiale et entraîné en rotation par le barillet (210).

11. Sélecteur de commande selon la revendication 10, **caractérisé en ce que** le déplacement en rotation des doigts (221, 222) assure la sélection des vitesses et **en ce que** leur déplacement en translation axiale assure l'engagement des vitesses.

12. Sélecteur de commande selon l'une des revendications 7 à 11, **caractérisé en ce que** le barillet (210) comporte en périphérie un secteur denté (214) entraîné en rotation par l'actionneur (217).

13. Sélecteur de commande selon l'une des revendications 9 à 12, **caractérisé en ce que** le chariot de passage (220) présente une partie cylindrique (220a), sur laquelle sont rapportés les doigts de passage (221,222).

14. Sélecteur de commande selon la revendication 13, **caractérisé en ce que** la partie cylindrique (220a) du chariot est partiellement obstruée par une cloison médiane (223) définissant avec celle-ci, le barillet de sélection (210) et l'axe (300) deux chambres de compression antagonistes (306, 307).

15. Sélecteur de commande selon la revendication 14, **caractérisée en ce que** la cloison (223) sépare les deux chambres de manière à constituer un piston de commande en translation du chariot (220) sur l'axe (300) et le barillet (210).

16. Sélecteur de commande selon l'une des revendications 7 à 15, **caractérisé en ce que** le retour et le positionnement au point mort de l'actionneur de passage (220) sont assurés par un dispositif mécanique à ressorts antagonistes (321, 325).

17. Sélecteur de commande selon la revendication 16, **caractérisé en ce que** le sélecteur (200) comporte une coupelle extérieure (320) plaquée contre un épaulement (301) de l'axe (300), et contre une extrémité du chariot (210) en position de point mort.

18. Sélecteur de commande selon la revendication 17, **caractérisé en ce que** le sélecteur (200) comporte un premier ressort (321) repoussant le chariot vers la position de point mort par l'intermédiaire de la première coupelle (320) et un second ressort (325) moins chargé que le premier.

19. Sélecteur de commande selon l'une des revendications des revendications 9 à 18, **caractérisé en ce que** le chariot (220) porte sur sa périphérie deux rampes en forme de V (226) coopérant avec un contacteur (227) ou un potentiomètre capable de renseigner en permanence un dispositif de contrôle sur la position axiale du chariot (220).

20. Dispositif de commande de boîte de vitesses, **caractérisé en ce qu**'il comporte un sélecteur conforme à l'une des revendications 7 à 19.

21. Boîte de vitesses **caractérisée en ce qu'**elle comporte un dispositif de commande ou un sélecteur conforme à l'une des revendications précédentes.

## Claims

1. Control device controlling the selection and changing of gears (10) in a gearbox comprising parallel shafts (100, 101, 102) and idling pinions, comprising internal gear-selection and gear-change means which, using actuating forks (230, 240, 250, 260) move the dog clutch rings (110, 111, 112, 113) of the idling pinions, comprising an electromechanical selection actuator (217) and a single hydraulic gear-change actuator (220), **characterized in that** the electromechanical selection actuator (217) is positioned outside the gearbox and **in that** the hydraulic gear-change actuator (220) is installed inside the gearbox.

2. Control device according to Claim 1, **characterized in that** the gear-selection and gear-change means are rotationally driven about an axis parallel to the primary shaft (100) and secondary shafts (101, 102).

3. Control device according to Claim 2, **characterized in that** the means comprise a cylindrical selection barrel (210) rotationally driven by the actuator (217) and which has larger-diameter peripheral sectors (211, 212, 213) which disengage the ratios and provide lock up at the neutral point.

4. Control device according to Claim 3, **characterized in that** the hydraulic actuator consists of a cylindrical gear-change carriage (220) concentric with the barrel (210) and positioned on the outside thereof.

5. Control device according to Claim 3 or 4, **characterized in that** the barrel (210) at its periphery has a tipped sector (214) rotationally driven by the actuator (217).

6. Control device according to Claim 3, 4 or 5, **characterized in that** the gear-selection and gear-change means comprise a common support spindle (300) for the barrel (210) and for the carriage (220), constituting with these a selector (200) positioned inside the gearbox.

7. Gearbox internal control selector **characterized in that** it comprises a cylindrical selection barrel (210) rotationally driven by an electromechanical actuator (217) positioned outside the gearbox, and a single hydraulic gear-change actuator (220).

8. Control selector according to Claim 7, **characterized in that** the barrel (210) is rotationally driven by the actuator (217) and which has larger-diameter peripheral sectors (211, 212, 213) which disengage the ratios and provide lock up at the neutral point.

9. Control selector according to Claim 7 or 8, **characterized in that** the hydraulic actuator consists of a cylindrical gear-change carriage (220) concentric with the barrel (210) and positioned on the outside thereof.

10. Control selector according to Claim 9, **characterized in that** the carriage (220) has at least one finger (221, 222) that can move in terms of axial translation and is rotationally driven by the barrel (210).

11. Control selector according to Claim 10, **characterized in that** the rotational movement of the fingers (221, 222) selects the gears and **in that** the axial translational movement of these fingers engages the gears.

12. Control selector according to one of Claims 7 to 11, **characterized in that** the barrel (210) at its periphery has a tipped sector (214) rotationally driven by the actuator (217).

13. Control selector according to one of Claims 9 to 12, **characterized in that** the gear-change carriage (220) has a cylindrical part (220a) to which the gear-change fingers (221, 222) are attached.

14. Control selector according to Claim 13, **characterized in that** the cylindrical part (220a) of the carriage is partially obstructed by a central partition (223) defining there, with this cylindrical part, the selector barrel (210) and the spindle (300), two antagonistic compression chambers (306, 307).

15. Control selector according to Claim 14, **characterized in that** the partition (223) separates the two chambers in such a way as to form a piston that controls the translational movement of the carriage (220) along the spindle (300) and the barrel (210).

16. Control selector according to one of Claims 7 to 15, **characterized in that** the gear-change actuator (220) is returned to and positioned at the neutral point by a mechanical device involving antagonistic springs (321, 325).

17. Control selector according to Claim 16, **characterized in that** the selector (200) comprises an external cup (320) pressed firmly against a shoulder (301) of the spindle (300) and against one end of the carriage (210) in the neutral point position.

18. Control selector according to Claim 17, **characterized in that** the selector (200) comprises a first spring (321) pushing the carriage towards the neutral point position via the first cup (320) and a second spring (325) that is less heavily loaded than the first one.

19. Control selector according to one of Claims 9 to 18, **characterized in that** the carriage (220) bears on its periphery two V-shaped ramps (226) collaborating with a contactor (227) or a potentiometer capable of permanently informing a monitoring device as to the axial position of the carriage (220).

20. Gearbox control device, **characterized in that** it comprises a selector according to one of Claims 7 to 19.

21. Gearbox **characterized in that** it comprises a control device or a selector according to one of the preceding claims.

## Patentansprüche

1. Steuervorrichtung zur Wahl und zum Schalten der Gänge (10) eines Schaltgetriebes mit parallelen Wellen (100, 101, 102) und mit Freilaufzahnrädern, die interne Mittel für die Wahl und das Schalten von Gängen aufweist, die über Betätigungsgabeln (230, 240, 250, 260) Klauenkupplungsringe (110, 111, 112, 113) der Freilaufzahnräder verschieben, mit einem elektromechanischen Wahlsteller (217) und mit einem einzigen hydraulischen Schaltsteller (220); **dadurch gekennzeichnet, dass** der elektromechanische Wahlsteller (217) außerhalb des Getriebegehäuses angeordnet ist und dass der hydraulische Schaltsteller (220) innerhalb des Getriebegehäuses angeordnet ist.

2. Steuervorrichtung nach Anspruch 1, **dadurch gekennzeichnet, dass** die Wahl- und Schaltmittel der Gänge um eine Achse in Drehung versetzt werden, die zur Hauptwelle (100) und Nebenwelle (101, 102) parallel verläuft.

3. Steuervorrichtung nach Anspruch 2, **dadurch gekennzeichnet, dass** die Mittel eine zylindrische Wahltrommel (210) aufweisen, die vom Wahlsteller (217) in Drehung versetzt wird und Umfangssektoren (211, 212, 213) mit größerem Durchmesser aufweist, die das Auskuppeln der Gänge und das Verriegeln in der Leerlaufstellung gewährleisten.

4. Steuervorrichtung nach Anspruch 3, **dadurch gekennzeichnet, dass** der hydraulische Schaltsteller aus einem zylindrischen Schaltschlitten (220) besteht, der konzentrisch zur Trommel (210) und außerhalb dieser letzteren angeordnet ist.

5. Steuervorrichtung nach Anspruch 3 oder 4, **dadurch gekennzeichnet, dass** die Trommel (210) am Umfang einen gezahnten Sektor {214} aufweist, der vom Wahlsteller (217) in Drehung versetzt wird.

6. Steuervorrichtung nach Anspruch 3, 4 oder 5, **dadurch gekennzeichnet, dass** die Auswahl- und Schaltmittel eine gemeinsame Trägerachse (300) für die Trommel (210) und den Schlitten (220) aufweisen und mit diesen letzteren einen Wählschalter (200) bilden, der innerhalb des Schaltgetriebes angeordnet ist.

7. Innerer Steuerwählschalter eines Schaltgetriebes, **dadurch gekennzeichnet, dass** er eine zylindrische Wahltrommel (210), die von einem elektromechanischen Wahlsteller (217) in Drehung versetzt wird, der außerhalb des Schaltgetriebes angeordnet ist, und einen einzigen hydraulischen Schaltsteller (220) aufweist.

8. Steuerwählschalter nach Anspruch 7, **dadurch gekennzeichnet, dass** die Trommel (210) vom Wahlsteller (217) in Drehung versetzt wird und Umfangssektoren (211, 212, 213) mit größerem Durchmesser aufweist, die das Auskuppeln der Gänge und das Verriegeln in der Leerlaufstellung gewährleisten.

9. Steuerwählschalter nach Anspruch 7 oder 8, **dadurch gekennzeichnet, dass** der hydraulische Schaltsteller aus einem zylindrischen Schaltschlitten (220) besteht, der konzentrisch zur Trommel (210) und außerhalb dieser Trommel angeordnet ist.

10. Steuerwählschalter nach Anspruch 9, **dadurch gekennzeichnet, dass** der Schlitten (220) mindestens einen Finger (221, 222) aufweist, der axial translationsbeweglich ist und von der Trommel (210) in Drehung versetzt wird.

11. Steuerwählschalter nach Anspruch 10, **dadurch gekennzeichnet, dass** die Drehbewegung der Finger (221, 222) die Wahl der Gänge gewährleistet und dass ihre axiale Translationsbewegung das Schalten der Gänge gewährleistet.

12. Steuerwählschalter nach einem der Ansprüche 7 bis 11, **dadurch gekennzeichnet, dass** die Trommel (210) am Umfang einen gezahnten Sektor (214) aufweist, der vom Wahlsteller (217) in Drehung versetzt wird.

13. Steuerwählschalter nach einem der Ansprüche 9 bis 12, **dadurch gekennzeichnet, dass** der Schaltschlitten (220) einen zylindrischen Bereich (220a) aufweist, auf den die Schaltfinger (221, 222) angesetzt sind.

14. Steuerwählschalter nach Anspruch 13, **dadurch gekennzeichnet, dass** der zylindrische Bereich (220a) des Schlittens teilweise von einer mittleren Trennwand (223) verdeckt wird und mit dieser, der Wahltrommel (210) und der Achse (300) zwei einander entgegenwirkende Kompressionskammern (306, 307) bilden.

15. Steuerwählschalter nach Anspruch 14, **dadurch gekennzeichnet, dass** die Trennwand (223) die zwei Kammern so trennt, dass ein Kolben zur Steuerung des Schlittens (220) in Translationsbewegung auf der Achse (300) und der Trommel (210) gebildet wird.

16. Steuerwählschalter nach einem der Ansprüche 7 bis 15, **dadurch gekennzeichnet, dass** die Rückkehr und die Positionierung in der Leerlaufstellung des Schaltstellers (220) von einer mechanischen Vorrichtung mit gegenwirkenden Federn (321, 325) gewährleistet wird.

17. Steuerwählschalter nach Anspruch 16, **dadurch gekennzeichnet, dass** der Wählschalter (200) eine äußere Kapsel (320) aufweist, die gegen eine Schulter (301) der Achse (300) und gegen ein Ende des Schlittens (210) in der Leerlaufstellung gedrückt ist.

18. Steuerwählschalter nach Anspruch 17, **dadurch gekennzeichnet, dass** der Wählschalter (200) eine erste Feder (321), die den Schlitten mittels der ersten Kapsel (320) in die Leerlaufstellung zurückschiebt, und eine zweite Feder (325) aufweist, die weniger gespannt ist als die erste.

19. Steuerwählschalter nach einem der Ansprüche 9 bis 18, **dadurch gekennzeichnet, dass** der Schlitten (220) auf seinem Umfang zwei V-förmige Rampen (226) trägt, die mit einem Kontaktelement (227) oder einem Potentiometer zusammenwirken, das in der Lage ist, durchgehend eine Kontrollvorrichtung über die axiale Stellung des Schlittens (220) zu informieren.

20. Steuervorrichtung eines Schaltgetriebes, **dadurch gekennzeichnet, dass** sie einen Wählschalter gemäß einem der Ansprüche 7 bis 19 aufweist.

21. Schaltgetriebe, **dadurch gekennzeichnet, dass** es eine Steuervorrichtung oder einen Wählschalter gemäß einem der vorhergehenden Ansprüche aufweist.
